(19) Europäisches Patentamt

European Patent Office

Office européen des brevets

(11) **EP 0 973 216 A1**

(12) **EUROPEAN PATENT APPLICATION**

(43) Date of publication:
**19.01.2000 Bulletin 2000/03**

(51) Int. Cl.[7]: **H01M 4/38**

(21) Application number: **99113494.1**

(22) Date of filing: **13.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.07.1998 JP 20160098**

(71) Applicant:
**SHIN-ETSU CHEMICAL CO., LTD.**
**Chiyoda-ku Tokyo (JP)**

(72) Inventor:
**Ishii, Masatoshi,**
**c/oMagnetic Mat.Res.&Devel.Cent.**
**Takefu, Fukui-ken (JP)**

(74) Representative:
**Luderschmidt, Schüler & Partner GbR**
**Patentanwälte,**
**John-F.-Kennedy-Strasse 4**
**65189 Wiesbaden (DE)**

(54) **Hydrogen absorbing alloy powder and negative electrodes formed thereof**

(57) Provided is a hydrogen absorbing alloy powder which, when used to form negative electrodes for nickel metal-hydride secondary batteries, can achieve a high capacity and a long life simultaneously in the resulting batteries, exhibits good corrosion resistance to alkalis, and is advantageous from the viewpoint of cost. This object is accomplished by a hydrogen absorbing alloy powder wherein the alloy powder comprises spherical and/or failed-spherical particles and not less than 60% of the particles are composed of 20 or less crystal grains.

**Description**

BACKGROUND OF THE INVENTION

1. Field of the invention

This invention relates to a hydrogen absorbing alloy powder which can suitably be used to form the negative electrodes of nickel metal-hydride secondary batteries. More particularly, it relates to a hydrogen absorbing alloy powder which, when used to form the negative electrodes of nickel metal-hydride secondary batteries, can-yield electrodes having excellent cycle life characteristics, and to electrodes formed thereof.

2. Description of the related art

Since the discovery of hydrogen absorbing alloys capable of absorbing and desorbing hydrogen, they not only have been used as hydrogen storage means, but also have been applied to batteries and the like. In particular, alkaline secondary batteries using a hydrogen absorbing alloy have already been put to practical use, and various attempts have successively been made to improve the capacity and life of the hydrogen absorbing alloy used therefor.
That is, with respect to the initially investigated $LaNi_5$ alloy having a $CaCu_5$ type crystal structure, an improvement in capacity and life has been achieved by replacing a part of La with Ce, Pr, Nd and other rare earth elements, or by replacing a part of Ni with a metallic element such as Al, Co or Mn.

SUMMARY OF THE INVENTION

However, when such hydrogen absorbing alloys are used to form negative electrodes for batteries, it has been very difficult to achieve a high capacity and a long life simultaneously in the resulting batteries.
That is, if the La content in the alloy composition is increased in order to further enhance the capacity, the resulting electrodes will have the disadvantage that their corrosion resistance to alkalis becomes poor and results in a shorter life. On the other hand, if the Co content is decreased in order to reduce the cost of the alloy, the resulting electrodes will have the disadvantage that their life is further shortened.
Accordingly, an object of the present invention is to provide a hydrogen absorbing alloy powder which can suitably be used to form the negative electrodes of nickel metal-hydride secondary batteries and can exhibit a long life.
In order to overcome the above-described disadvantages, the present inventors made intensive investigations and have now found that, when a hydrogen absorbing alloy powder wherein the alloy powder comprises spherical and/or failed-spherical particles and numerically not less than 60% of the particles are composed of 20 or less crystal grains is used for the negative electrode of a secondary battery, its cycle life characteristics can be improved without reducing its discharge capacity. The present invention has been completed on the basis of this finding.
The hydrogen absorbing alloy powder of the present invention, when used to form the negative electrodes of nickel metal-hydride secondary batteries, exhibits very excellent cycle life characteristics.

DETAILED DESCRIPTION OF PREFERRED EMBODIMENTS

In order to improve cycle life characteristics, the hydrogen absorbing alloy powder of the present invention is characterized in that the alloy powder comprises spherical and/or failed-spherical particles and not less than 60% of the particles by numbers are composed of 20 or less crystal grains and preferably 5 or less crystal grains.
The irregular particles of a mechanically pulverized powder have sharp edges, and these edges tend to be broken owing to volume expansion and contraction induced by the reactions for absorbing and desorbing hydrogen, resulting in the production of a fine powder. Since this fine powder has a large specific surface area, corrosion of its surfaces by alkali causes a decrease in the amount of hydrogen absorbed per unit volume and a reduction in electrical conductivity. Consequently, the degree of utilization of the hydrogen absorbing alloy in the negative electrode is reduced and the discharge characteristics of the battery are deteriorated. Moreover, the reactions for absorbing and desorbing hydrogen cause the particles to expand and contract, so that cracks occur at grain boundaries and produce interstices. If the number of crystal grains constituting each particle is more than 20, such interstices may increase to such an extent that the reactions for absorbing and desorbing hydrogen are inhibited. Moreover, as the reactions proceed, i.e., as the charging-discharging cycles are repeated, the initially spherical and/or failed-spherical particles are deformed to cause an increase of interstices between particles and a reduction in the degree of utilization of the hydrogen absorbing alloy in the negative electrode. Furthermore, if the proportion of particles composed of 20 or less crystal grains is less than 60%, the interstices within particles and between particles may increase, as described above, to such an extent that the reactions for absorbing and desorbing hydrogen are inhibited.

In the practice of the present invention, it is especially preferable to control the particle structure so that not less than 80% of the particles are composed of 20 or less crystal grains.

Moreover, it is preferable that the alloy powder used in the present invention have an average particle diameter of 10 to 100 μm. It is more preferable that not less than 90% of the particles have a diameter of not greater than 175 μm, because this can further suppress a reduction in capacity.

Furthermore, in the practice of the present invention, the hydrogen absorbing alloy powder having a controlled number of crystal grains is preferably subjected to a heat treatment. In order to improve cycle life characteristics, it is preferable to heat-treat the hydrogen absorbing alloy powder at a temperature of 200 to 1,100°C under an atmosphere of an inert gas such as Ar, He or the like. If the heat-treating temperature is lower than 200°C, no effective may be produced in improving cycle life characteristics. If the heat-treating temperature is higher than 1,100°C, the powder may be fused together and hence may need to be pulverized. Moreover, such an excessively high temperature may cause the segregation of elements, resulting in a reduction in cycle life characteristics. More preferably, the hydrogen absorbing alloy powder is heat-treated at a temperature of 400 to 1,100°C.

No particular limitation is placed on the type of the hydrogen absorbing alloy used in the present invention, and it may be suitably selected from various well-known hydrogen absorbing alloys used to form negative electrodes, such as AB or $AB_2$ type Ti-based hydrogen absorbing alloys, $AB_2$ type Zr-based hydrogen absorbing alloys, and $AB_5$ type rare earth-based hydrogen absorbing alloys. Among others, in order to improve the cycle life characteristics of the resulting batteries, $LaNi_5$ type hydrogen absorbing alloys are preferably used. Among $LaNi_5$ type hydrogen absorbing alloys, $MmNi_5$ type hydrogen absorbing alloys are preferred. In the aforesaid alloys, Mm is a mixture of rare earth elements such as La, Ce, Pr and Nd, and known as misch metal. In order to improve cycle life characteristics, it is preferable to use a $NmNi_5$ type hydrogen absorbing alloy in which a part of Ni is replaced with Al and Mn, and further with Co.

The particularly preferred hydrogen absorbing alloys which can be used in the present invention are $LaNi_5$ type alloys of the general formula $\{(La)_x R_{1-x}\}_1 (Ni)_a (M)_b (Co)_y$ in which the La content based on the total amount of rare earth elements including La is not less than 50% by weight.

In the above formula, R is at least one element selected from the group consisting of rare earth elements excluding La and including Y (yttrium), and preferably selected from Ce, Pr and Nd. M is at least one element selected from the group consisting of Al, Cu, Fe, Mn, Ti, Cr and Zr. y, a and b are positive numbers representing atomic ratios based on the combined amount of the rare earth elements La and R. These numbers satisfy the requirements defined by $0 < y < 1.0$, $0 < b \leqq 2.0$, and $4.0 \leqq a+b+y \leqq 6.0$ .

In the above formula, x is a weight ratio in the range of 0.5 to 1. In the present invention, the La content as expressed in terms of a weight ratio based on total amount of rare earth elements including La should preferably be not less than 0.5 and more preferably not less than 0.75, in order to improve discharge capacity. If the La content as expressed in terms of a weight ratio is less than 0.5, the resulting discharge capacity may be insufficient.

Moreover, in order to achieve both an improvement in capacity and a reduction in cost, the Co content as expressed in terms of an atomic ratio should preferably be in the range of 0.1 to 0.5 and more preferably 0.2 to 0.4. If the Co content is greater than 1.0, not only the resulting alloy powder may become expensive, but also a reduction in discharge capacity may result. If the Co content is unduly low, the resulting alloy may be inexpensive but show a reduction in cycle life characteristics. It is especially preferable that M include both Al and Mn.

In the practice of the present invention, a mixture of metallic elements is prepared by combining various elements constituting the above-defined alloy in desirable proportions, and melted at a temperature of about 1,300 to 1,600°C in an arc melting process, high-frequency melting process, plasma melting process or other process having an atmosphere of an inert gas such as Ar, He, Ne or the like. In the practice of the present invention, the resulting molten alloy (or melt) is formed into an alloy powder comprising spherical or failed-spherical particles according to a rotating electrode process, rotating disk process, centrifugal atomization process or the like. Specifically, the melt is centrifugally atomized by pouring the melt onto a disk (having a diameter of 35 mm in this case) rotating at a circumferential speed of 20 to 70 m per second and quenching it rapidly (at a rate of $10^2$ to $10^5$ °C/sec). Thus, there is obtained an alloy powder comprising spherical or failed-spherical particles having a crystal structure characteristic of the present invention and an average diameter of about 10 to 100 μm. In this alloy powder, it is preferable that not less than 90% of the particles have a diameter of not greater than 175 μm.

In the practice of the present invention, it is essential to use an alloy powder comprising spherical and/or failed-spherical particles. The irregular particles of a powder obtained by pulverizing an ingot mechanically have sharp edges, and these edges tend to be broken owing to volume expansion and contraction induced by the reactions for absorbing and desorbing hydrogen, resulting in the production of a fine powder. Since this fine powder has a large specific surface area, corrosion of its surfaces by alkali causes a decrease in the amount of hydrogen absorbed per unit volume and a reduction in electrical conductivity. Consequently, the degree of utilization of the hydrogen absorbing alloy in the negative electrode is reduced and the discharge characteristics of the battery are deteriorated.

The alloy powder comprising spherical and/or failed-spherical particles may comprise spherical particles alone, failed-spherical particles alone, or a mixture thereof. The term "failed-spherical" as used herein means any particle shape having a curved surface substantially free of sharp edges. Specifically, failed-spherical particles include not only particles resembling a sphere in shape, but also gourd-shaped, egg-shaped and similar particles. Their shapes are characterized in that the ratio of the largest diameter to the smallest diameter is not greater than 3 and they are completely or substantially free of sharp edges.

A mechanically pulverized powder comprising irregular particles having sharp edges fails to produce the effects of the present invention.

The composition used to fill electrodes therewith comprises an alloy powder having a crystal structure defined by the present invention and serving as an active material, and a binder. Electrodes may readily be formed by preparing a paste from the aforesaid alloy powder and a binder such as polyvinyl alcohol, a cellulose derivative (e.g., carboxymethylcellulose), PTFE, polyethylene oxide or polymer latex, and then filling electrically conducting three-dimensional supports (e.g., foamed nickel bodies or fibrous nickel bodies) or electrically conducting two-dimensional supports (e.g., punching metals) with the paste.

In preparing the paste, an electrically conducting filler such as carbon powder, Ni powder or Cu powder may be added thereto in an amount of 0.1 to 10% by weight based on the alloy.

The aforesaid binder may be used in an amount of 0.1 to 20 parts by weight per 100 parts by weight of the alloy. Nickel metal-hydride secondary batteries using negative electrodes formed of the hydrogen absorbing alloy powder of the present invention have a high capacity and a long cycle life during repeated charging and discharging, and exhibit an excellent high-rate discharge property.

Although the allow powder of the present invention is highly suitable for the formation of electrodes, it may also be used as a hydrogen-storing material for heat pumps and the like.

The present invention is further illustrated by the following examples. However, these examples are not to be construed to limit the scope of the invention.

Examples and Comparative Examples

Misch metal (Mm) composed of 40-80% by weight of La, 2% by weight of Pr, 3% by weight of Nd, and the balance being Ce was used. Al, Co, Mn and Ni were weighed out so that their atomic ratios based on Mm would be 0.3, 0.05-0.6, 0.2 and 3.9-4.5, respectively. These elements were melted in a high-frequency melting furnace having an atmosphere of argon, and the resulting hydrogen absorbing alloy melt was poured at a flow rate of 15 kg per minute onto a disk having a diameter of 35 mm and rotating at a circumferential speed of 35 m per second. Thus, there was obtained a hydrogen absorbing alloy powder having an average particle diameter of 32 μm. In the same manner as described above, hydrogen absorbing alloy powders having an average particle diameter in the range of 7 to 120 μm were also obtained by regulating the circumferential speed of the disk and the flow rate of the melt. Some of the powders were heat-treated at 300-1,150°C prior to use.

For purposes of comparison, a mixture of elements in the above-described proportions was melted in a high-frequency melting furnace, and cast in a water-cooled mold. The hydrogen absorbing alloy so prepared was heat-treated at 1,050°C and mechanically pulverized to obtain a hydrogen absorbing alloy powder having an average particle diameter of 32 μm (Comparative Example 1). Moreover, a mixture of elements in the above-described proportions was melted in a high-frequency melting furnace, and subjected to an argon gas atomization process under conditions including an injection pressure of 10.5 kgf/cm$^2$ and a melt flow rate of 13 kg per minute. Thus, there was obtained a powder having an average particle diameter of 32 μm (Comparative Example 2). Furthermore, a mixture of elements in the above-described proportions was melted in a high-frequency melting furnace, and subjected to a rapid roll quenching process under conditions including a circumferential speed of 20 m per second and a melt flow rate of 25 kg per minute. The resulting thin ribbon was heat-treated (at 1,050°C) and mechanically pulverized to obtain a powder having an average particle diameter of 32 μm (Comparative Example 3). The power obtained with the heat treatment has magnetization of 0.10 to 0.60 emu/g, while the powder obtained without the heat treatment has magnetization of 0.01 emu/g. The magnetization was measured using a VS magetometer manufactured by Riken-Denshi Co., Ltd.

Number of crystal grains and proportion of particles

With regard to each of the powders obtained in the above-described manner, a section thereof was observed under a polarization microscope. The number of crystal grains was counted for 20-50 particles and the average number of crystal grains was calculated. Moreover, the proportion of particles composed of 5 or less crystal grains and the proportion of particles composed of 20 or less crystal grains were also calculated.

Construction of batteries

A 2-g sample was taken from each of the powders obtained in the above-described manner. 0.1 g of Ni powder (T-210; manufactured by Inco Ltd.) and 0.5 g of a 3% aqueous solution of polyvinyl alcohol (with an average degree of polymerization of 2,000) were added thereto and mixed therewith to prepare a paste. This paste was applied onto a fibrous Ni support, dried, and then pressed to make a negative electrode having a thickness of 0.5 mm. On the other hand, a sintered nickel positive electrode formed according to a well-known method was used as a nickel oxide positive electrode. Then, an open nickel metal-hydride secondary battery of the negative electrode regulation type was constructed by using the aforesaid negative and positive electrodes in combination with a separator comprising a polypropylene nonwoven fabric and an electrolyte comprising a 6N aqueous solution of potassium hydroxide. The cycle life characteristics of the batteries so constructed were evaluated according to the following procedure.

Evaluation of cycle life characteristics

Each of the batteries constructed in the above-described manner was charged at a constant temperature of 20°C and a current of 180 mA for 5 hours, and then discharged at a current of 120 mA, until the battery voltage reached 1.0 V. This cycle was repeated, and the reduction in discharge capacity after 200 cycles was evaluated in terms of the "degree of deterioration (mAh/g/cycle)" obtained by plotting discharge capacities vs cycle numbers and measuring the slope of the resulting line between cycle 200 and cycle 201. Accordingly, the degree of deterioration is graphically obtained and may not be the same as the difference of discharge capacities between cycles 200 and 201. The results of evaluation are shown in Table 1.

Table 1

| Experiment No. | | La content in Mm (%) | Co content (atomic ratio) | Preparation method | Heat-treating temp. (°C) |
|---|---|---|---|---|---|
| 1 | Comparative Example 1 | 80 | 0.3 | Water-cooled mold | 1050 |
| 2 | Comparative Example 2 | 80 | 0.3 | Gas atomization | 800 |
| 3 | Comparative Example 3 | 80 | 0.3 | Rapid roll quenching | 900 |
| 4 | Example 1 | 80 | 0.3 | Centrifugal atomization | Not treated |
| 5 | Example 2 | 80 | 0.3 | Centrifugal atomization | 300 |
| 6 | Example 3 | 80 | 0.3 | Centrifugal atomization | 400 |
| 7 | Example 4 | 80 | 0.3 | Centrifugal atomization | 800 |
| 8 | Example 5 | 80 | 0.3 | Centrifugal atomization | 1100 |
| 9 | Example 6 | 80 | 0.3 | Centrifugal atomization | 1150 |
| 10 | Example 7 | 40 | 0.3 | Centrifugal atomization | Not treated |
| 11 | Example 8 | 50 | 0.3 | Centrifugal atomization | Not treated |
| 12 | Example 9 | 100 | 0.3 | Centrifugal atomization | Not treated |
| 13 | Example 10 | 80 | 0.05 | Centrifugal atomization | Not treated |
| 14 | Example 11 | 80 | 0.1 | Centrifugal atomization | Not treated |

Table 1 (continued)

| Experiment No. | | La content in Mm (%) | Co content (atomic ratio) | Preparation method | Heat-treating temp. (°C) |
|---|---|---|---|---|---|
| 15 | Example 12 | 80 | 0.5 | Centrifugal atomization | Not treated |
| 16 | Example 13 | 80 | 0.6 | Centrifugal atomization | Not treated |
| 17 | Example 14 | 80 | 0.3 | Centrifugal atomization | Not treated |
| 18 | Example 15 | 80 | 0.3 | Centrifugal atomization | Not treated |
| 19 | Example 16 | 80 | 0.3 | Centrifugal atomization | Not treated |
| 20 | Example 17 | 80 | 0.3 | Centrifugal atomization | Not treated |
| 21 | Comparative Example 4 | 80 | 0.3 | Centrifugal atomization | Not treated |
| 22 | Example 18 | 80 | 0.3 | Centrifugal atomization | Not treated |
| 23 | Example 19 | 80 | 0.3 | Centrifugal atomization | Not treated |
| 24 | Example 20 | 80 | 0.3 | Centrifugal atomization | Not treated |
| 25 | Example 21 | 80 | 0.3 | Centrifugal atomization | Not treated |

Table 2

| Experiment No. | | Particle shape | Average particle diameter (μm) | 90% particle diameter (μm) | Number of crystal grains | Proportion 1 (%) | Proportion 2 (%) | Degree of deterioration (mAh/g/cycle) |
|---|---|---|---|---|---|---|---|---|
| 1 | Comparative Example 1 | Irregular | 32 | 72 | 1.1 | 100 | 100 | 0.53 |
| 2 | Comparative Example 2 | Spherical | 33 | 71 | 32 | 100 | 4 | 0.65 |
| 3 | Comparative Example 3 | Irregular | 31 | 79 | 58 | 100 | 2 | 0.40 |
| 4 | Example 1 | Spherical | 32 | 67 | 2.1 | 95 | 100 | 0.18 |
| 5 | Example 2 | Spherical | 32 | 67 | 3.7 | 93 | 97 | 0.18 |
| 6 | Example 3 | Spherical | 32 | 67 | 2.2 | 95 | 100 | 0.14 |
| 7 | Example 4 | Spherical | 32 | 67 | 1.9 | 100 | 100 | 0.09 |

Table 2 (continued)

| Experi-ment No. | | Particle shape | Average particle diameter (µm) | 90% parti-cle diame-ter (µm) | Number of crystal grains | Propor-tion 1 (%) | Propor-tion 2 (%) | Degree of deteriora-tion (mAh/g/cycle) |
|---|---|---|---|---|---|---|---|---|
| 8 | Example 5 | Spherical | 32 | 67 | 2.0 | 95 | 100 | 0.10 |
| 9 | Example 6 | Spherical | 32 | 67 | 2.0 | 95 | 100 | 0.19 |
| 10 | Example 7 | Spherical | 35 | 73 | 3.4 | 93 | 97 | 0.15 |
| 11 | Example 8 | Spherical | 30 | 64 | 2.5 | 95 | 100 | 0.16 |
| 12 | Example 9 | Spherical | 33 | 68 | 2.2 | 95 | 100 | 0.17 |
| 13 | Example 10 | Spherical | 37 | 73 | 3.6 | 93 | 97 | 0.21 |
| 14 | Example 11 | Spherical | 36 | 72 | 2.5 | 95 | 100 | 0.16 |
| 15 | Example 12 | Spherical | 32 | 68 | 2.0 | 95 | 100 | 0.10 |
| 16 | Example 13 | Spherical | 33 | 69 | 2.0 | 100 | 100 | 0.09 |
| 17 | Example 14 | Spherical | 33 | 72 | 5.4 | 95 | 95 | 0.22 |
| 18 | Example 15 | Spherical | 34 | 72 | 5.5 | 87 | 90 | 0.24 |
| 19 | Example 16 | Spherical | 36 | 74 | 5.6 | 75 | 93 | 0.25 |
| 20 | Example 17 | Spherical | 32 | 69 | 12 | 64 | 68 | 0.26 |
| 21 | Compara-tive Exam-ple 4 | Spherical | 33 | 70 | 17 | 50 | 54 | 0.31 |
| 22 | Example 18 | Spherical | 7 | 16 | 1.6 | 100 | 100 | 0.36 |
| 23 | Example 19 | Spherical | 13 | 39 | 1.8 | 100 | 100 | 0.23 |
| 24 | Example 20 | Spherical | 91 | 169 | 4.4 | 63 | 71 | 0.25 |
| 25 | Example 21 | Spherical | 120 | 260 | 7.2 | 26 | 62 | 0.37 |

(Notes for Table 2)

Particle shape: "Spherical" is meant to include failed-spherical particles.

Average particle diameter: The $D_{50}$ value determined by the microtrack method is regarded as the average particle diameter.

90% particle diameter: In the cumulative particle size distribution determined by the microtrack method, the $D_{90}$ value corresponding to the particle diameter up to which 90% of the particles are included is regarded as the 90% particle size.

Proportion 1: The proportion of particles composed of 5 or less crystal grains.

Proportion 2: The proportion of particles composed of 20 or less crystal grains.

Degree of deterioration: a value (mAh/g/cycle ) obtained by plotting discharge capacities and cycle numbers and measuring the slope of the resulting line between cycle 200 and cycle 201.

The results of Experiment Nos. 1 to 25 have demonstrated that, when used for the negative electrodes of nickel metal-hydride secondary batteries, the hydrogen absorbing alloy powders of the present invention bring about an improvement in cycle life. It has been confirmed by the results of Experiment Nos. 4 to 9 that an improvement in cycle life is achieved especially when the alloy powders are heat-treated at 400-1,100°C. Moreover, it has been confirmed by the results of Experiment Nos. 10 to 17 that an improvement in cycle life is achieved especially when the La content based on the total weight of rare earth elements including La is not less than 50% by weight and the atomic ratio of Co is not less than 0.1. It can be seen from the results of Experiment Nos. 22 to 25 that alloy powders having an average particle diameter ranging from 10 μm to 100 μm are particularly preferred. It can also be seen from the results of Experiment Nos. 24 and 25 that, in the particle size distribution of the alloy powder, not less than 90% of the particles should have a diameter of not greater than 175 μm.

**Claims**

1. A hydrogen absorbing alloy powder capable of absorbing and desorbing hydrogen, wherein the alloy powder comprises spherical and/or failed-spherical particles and not less than 60% of the particles by numbers are composed of 20 or less crystal grains.

2. A hydrogen absorbing alloy powder according to Claim 1 wherein the alloy powder has an average particle diameter of 10 to 100 μm.

3. A hydrogen absorbing alloy powder according to Claim 1 or 2 wherein, in the particle size distribution of the alloy powder, not less than 90% of the particles by numbers have a diameter of not greater than 175 μm.

4. A hydrogen absorbing alloy powder according to any of Claims 1 to 3 wherein the alloy powder comprises a $LaNi_5$ type alloy and the La content based on the total amount of rare earth elements including La is not less than 50% by weight.

5. A hydrogen absorbing alloy powder according to any of Claims 1 to 4 wherein the alloy powder has been heat-treated at a temperature of 200 to 1,100°C.

6. An negative electrode formed of a hydrogen absorbing alloy powder according to any of Claims 1 to 5.

European Patent Office

**EUROPEAN SEARCH REPORT**

Application Number

EP 99 11 3494

## DOCUMENTS CONSIDERED TO BE RELEVANT

| Category | Citation of document with indication, where appropriate, of relevant passages | Relevant to claim | CLASSIFICATION OF THE APPLICATION (Int.Cl7) |
|---|---|---|---|
| A | EP 0 647 973 A (SANYO ELECTRIC CO) 12 April 1995 (1995-04-12) * abstract * * page 3, line 51 - page 4, line 9 * | 1,2,6 | H01M4/38 |
| A | PATENT ABSTRACTS OF JAPAN vol. 018, no. 475 (E-1601), 5 September 1994 (1994-09-05) -& JP 06 163041 A (SANYO ELECTRIC CO LTD), 10 June 1994 (1994-06-10) * abstract * | 1 | |

TECHNICAL FIELDS SEARCHED (Int.Cl7)

C01B
H01M

The present search report has been drawn up for all claims

| Place of search | Date of completion of the search | Examiner |
|---|---|---|
| THE HAGUE | 2 November 1999 | Riba Vilanova, M |

EPO FORM 1503 03.82 (P04C01)

## ANNEX TO THE EUROPEAN SEARCH REPORT
## ON EUROPEAN PATENT APPLICATION NO.

EP 99 11 3494

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-1999

| Patent document cited in search report | | Publication date | Patent family member(s) | | Publication date |
|---|---|---|---|---|---|
| EP 0647973 | A | 12-04-1995 | JP | 7105943 A | 21-04-1995 |
| | | | JP | 7201329 A | 04-08-1995 |
| | | | DE | 69408504 D | 19-03-1998 |
| | | | DE | 69408504 T | 17-09-1998 |
| | | | US | 5529857 A | 25-06-1996 |
| JP 06163041 | A | 10-06-1994 | NONE | | |

EPO FORM P0459

For more details about this annex : see Official Journal of the European Patent Office, No. 12/82